# EUROPÄISCHE PATENTSCHRIFT

(11) **EP 2 661 952 B1**
(45) Veröffentlichungstag und Bekanntmachung des Hinweises auf die Patenterteilung: **05.10.2016**
(21) Anmeldenummer: 13002117.3
(22) Anmeldetag: 23.04.2013
(51) Int. Cl.: A01D 78/10

(54) **Heuwerbungsmaschine**
Haymaking machine
Machine de fenaison

(30) Priorität: 09.05.2012 DE 102012009073
(43) Veröffentlichungstag der Anmeldung: 13.11.2013
(73) Patentinhaber: Maschinenfabrik Bernard Krone GmbH, 48480 Spelle (DE)
(72) Erfinder: Helper, Erik, 48465 Quendorf (DE)

(56) Entgegenhaltungen:
- EP-A1- 0 514 302
- EP-A1- 0 517 632
- DE-A1- 3 717 307
- DE-U1- 9 312 222
- DE-U1-202009 000 858
- FR-A1- 2 675 979
- FR-A1- 2 882 622

## Beschreibung

Die vorliegende Erfindung betrifft eine Heuwerbungsmaschine, insbesondere zum Schwaden von landwirtschaftlichem Halmgut mit den Merkmalen des Oberbegriffs des Anspruchs 1. Derartige Heuwerbungsmaschinen können aufgrund von beidseitig an einem auf Laufrädern gegenüber dem Erdboden abgestützten Tragrahmen angeordneten Kreiselrechen zur Herstellung von Mittelschwaden oder Seitenschwaden eingesetzt werden. Bedingt durch ständig zunehmende Arbeitsbreiten dieser Heuwerbungsmaschinen ergibt sich für den Transport, wenn die Kreiselrechen aus einer bodenparallelen Arbeits- und Betriebsstellung in eine zumindest annähernd vertikale Transportstellung verschwenkt werden, eine ungünstige Schwerpunktslage sowie eine große Transporthöhe, so dass es dabei erforderlich ist, die Kreiselrechen in der hoch geschwenkten Stellung abzusenken. Dies wird über längenveränderlich ausgebildete Tragarme erreicht, über die die Kreiselrechen mit dem Tragrahmen verbunden sind.

Aus der DE 199 53 267 A1 geht ein Kreiselschwader hervor, bei dem beidseitig von einem Fahrgestell jeweils ein Rechkreisel über einen teleskopierbaren Ausleger um eine in Fahrtrichtung gerichtete Achse eines Klappgelenks am Fahrgestell angelenkt ist. Um die Transporthöhe möglichst gering zu halten, wenn die Rechkreisel in ihre nahezu vertikale Transportstellung hoch geschwenkt sind, kann die Transporthöhe dadurch reduziert werden, dass die Länge der teleskopierbaren Ausleger in der Transportstellung verringert wird. Zur Überführung der Rechkreisel aus der Arbeitsstellung in die nahezu vertikale Transportstellung ist ein erster Stellantrieb vorgesehen, während zur Veränderung der Länge der Ausleger ein zweiter Stellantrieb an dem Ausleger angebracht ist. Will man nun die Rechkreisel aus der Transportstellung, in der diese durch die Verringerung der Länge der Ausleger eine reduzierte Transporthöhe aufweisen, in die Arbeitsstellung zurück überführen, so besteht dabei die Gefahr, dass die Zinkenarme mit den Rechzinken der beidseitig vom Fahrgestell befindlichen Rechkreisel in Arbeitsstellung miteinander kollidieren, wenn nicht vor dem Abklappen der Rechkreisel die Auslegerlänge wieder vergrößert wird. Bei der täglichen Arbeitsbelastung des Maschinenbedieners wird diese Tätigkeit schnell mal vergessen. Als Folge können massive Schäden an den Rechkreiseln entstehen.

Aus der DE 20 2009 000 858 U1 ist eine Heuwerbungsmaschine in der Art eines Kreiselschwaders bekannt geworden, bei dem seitlich von einem mit einem Fahrgestell versehenen Maschinenrahmen jeweils zwei Schwadkreisel in einer in Fahrtrichtung offenen V-Form angeordnet sind und mittels quer zur Fahrtrichtung ausgerichteten Tragarmen mit dem Maschinenrahmen verbunden sind. In der Arbeits- und Betriebsstellung befinden sich Schwadkreisel und Tragarme in einer bodenparallelen Ausrichtung und können durch eine Verschwenkbewegung der Tragarme um in Fahrtrichtung gerichtete Achsen in eine vertikale Transportstellung verbracht werden. Sicherheitseinrichtungen zur Verhinderung von Fehlbedienungen bei der Veränderungen der Länge der Tragarme in Verbindung mit dem Abklappen der Schwadkreisel sind diesem druckschriftlichen Vorhalt nicht zu entnehmen.

Aufgabe der Erfindung ist es daher, eine Heuwerbungsmaschine der eingangs genannten Art dahingehend weiterzubilden, dass die Bedienungssicherheit verbessert ist.

Erfindungsgemäß wird diese Aufgabe durch die kennzeichnenden Merkmale des Anspruchs 1 gelöst. Vorteilhafte Weiterbildungen der Erfindung sind Gegenstand der weiteren Ansprüche.

Es wird mithin eine Heuwerbungsmaschine zum Schwaden von landwirtschaftlichem Halmgut mit zumindest zwei, um vertikale Achsen umlaufend angetriebenen und sich über Stützräder gegenüber dem Erdboden abstützenden Kreiselrechen vorgeschlagen, welche mit Zinken bestückte Zinkenarme aufweisen und über Tragarme an einem mit Laufrädern versehenen Tragrahmen schwenkbar angelenkt sind, so dass die Kreiselrechen aus einer bodenparallelen Arbeits- und Betriebsstellung über hydraulische Kolben-Zylinderanordnungen oder dgl. Stellglieder in eine zumindest annähernd vertikale Transportstellung und zurück überführbar sind und die Tragarme der Kreiselrechen in der Arbeits- und Betriebsstellung zur Anpassung der Schwadbreite und in der Transportstellung zur Anpassung der maximalen Transporthöhe längenveränderbar ausgebildet sind, wobei an dem den Kreiselrechen abgewandten Ende zumindest eines der Tragarme ein Sperrglied angeordnet ist, welches zwei Anlageflächen zum Erfassen eines Zustandes eines Tragarmes und/oder zum Sperren einer Bewegung eines Tragarmes aufweist. Das Sperrglied ist dabei aus einer ersten Stellung, in der die Schwenkbewegung eines Tragarmes aus der Transportstellung in die Arbeits- und Betriebsstellung unterbunden ist, in eine zweite Stellung, in der in der Arbeits- und Betriebsstellung die Anpassung der Schwadbreite auf einen, einen unteren Grenzwert unterschreitenden Betrag ausgeschlossen ist und zurück überführbar, wenn der jeweilige Tragarm eine Länge aufweist, bei der eine Kollision von beidseitig an dem Tragrahmen angelenkten Kreiselrechen in der Arbeits- und Betriebsstellung ausgeschlossen ist.

Unter dem Begriff der notwendigen geometrischen Bedingung versteht die Erfindung, dass das Sperrglied aus der ersten Stellung, in der die Schwenkbewegung eines Tragarmes aus der Transportstellung in die Arbeits- und Betriebsstellung unterbunden ist, in die zweite Stellung, in der in der Arbeits- und Betriebsstellung die Anpassung der Schwadbreite auf einen, einen unteren Grenzwert unterschreitenden Betrag ausgeschlossen ist überführbar ist, wenn der jeweilige Tragarm eine Länge aufweist, bei der eine Kollision von beidseitig an dem Tragrahmen angelenkten Kreiselrechen in der Arbeits- und Betriebsstellung ausgeschlossen ist.

Mit dem Sperrglied wird dem jeweiligen Tragarm der Kreiselrechen eine Sicherungseinrichtung zugeordnet, welche zwei Sicherungsfunktionen ausführen kann. In einer ersten Stellung ist das Sperrglied dazu eingerichtet, die Verschwenkung von zumindest einem Kreiselrechen aus der Transportstellung in eine Arbeits- und Betriebsstellung zu unterbinden. Diese Sicherungsfunktion soll dann aktiv sein, wenn nicht sichergestellt ist, dass durch die Einstellung einer vorbestimmten Länge des jeweiligen Tragarmes eine Kollision des betreffenden Kreiselrechens mit einem weiteren Kreiselrechen in der Arbeits- und Betriebsstellung ausgeschlossen ist. In diesem Zusammenhang sei auch erwähnt, dass eine Überführung der Kreiselrechen aus der Transportstellung in eine Arbeits- und Betriebsstellung selbstverständlich auch eine Vorgewendestellung mit einschließt, da diese während des Schwenkprozesses ja ohnehin durchlaufen wird. Weiterhin wird erfindungsgemäß die Länge des jeweiligen Tragarmes als das Maß angesehen, welches zwischen einer Anlenkstelle des Tragarmes am Tragrahmen und dem betreffenden Kreiselrechen ausgebildet ist. Die zweite Sicherungsfunktion kommt in der Arbeits- und Betriebsstellung zum Tragen. Hierdurch wird sichergestellt, dass eine Reduzierung der Länge des jeweiligen Tragarmes unterhalb eines vorbestimmten Grenzwertes ausgeschlossen ist, wenn der betreffende Kreiselrechen aus der Arbeits- und Betriebsstellung in eine Vorgewendestellung oder Transportstellung überführt werden soll.

Zur Ausübung der zwei Sicherheitsfunktionen weist das Sperrglied zwei Anlageflächen auf, wobei eine Anlagefläche der Erfassung eines Zustandes des betreffenden Tragarmes dient, während die zweite Anlagefläche zur Sperrung oder zum Ausschluss einer Bewegung des Tragarmes vorgesehen ist. Bei der Erfassung eines Zustandes des betreffenden Tragarmes wird erfindungsgemäß ermittelt, ob eine vorbestimmte Länge des betreffenden Tragarmes vorliegt. Außerdem ist hierbei bedeutsam, ob sich der Tragarm in der Arbeits- und Betriebsstellung oder in der Transportstellung befindet. Nach der Erfindung weist das Sperrglied zwei unter einem Winkel zueinander angestellte Anlageflächen auf, wobei es vorteilhafterweise vorgesehen ist, dass es sich bei dem Winkel zwischen den Anlageflächen um einen etwa rechten Winkel handelt.

In einer vorteilhaften Ausführungsform kann das Sperrglied an dem den Kreiselrechen abgewandten Ende des jeweiligen Tragarmes schwenkbar angebracht sein. Daraus ergibt sich, dass das Sperrglied eine erste Sicherungsfunktion in der Transportstellung und die zweite Sicherungsfunktion in der Arbeits- und Betriebsstellung ausführen kann.

Eine erfindungsgemäße Ausgestaltung geht davon aus, dass das Sperrglied als Winkelbauteil ausgeführt ist, wobei die Schenkel des Winkelbauteiles die Anlageflächen bilden. Vorzugsweise ist das Winkelbauteil an dem den Kreiselrechen abgewandten Ende des betreffenden Tragarmes um eine zumindest annähernd vertikale Schwenkachse frei beweglich am Tragarm angelenkt, wobei die vertikale Ausrichtung der Schwenkachse des Sperrgliedes sich auf einen Tragarm in der Arbeits- und Betriebsstellung bezieht. Dadurch ist es erfindungsgemäß möglich, dass das Sperrglied aufgrund der Schwerkraft und/oder der Position des Tragarmes sich entweder in der ersten oder zweiten Stellung befindet.

Die Erfindung soll nun anhand eines Ausführungsbeispiels näher erläutert werden:

In der Zeichnung zeigt:
- **Fig.1:**: eine Ansicht von oben auf eine erfindungsgemäße Heuwerbungsmaschine mit in Arbeits- und Betriebsstellung befindlichen Kreiselrechen;
- **Fig.2:**: eine teilweise abgebrochen dargestellte Ansicht von oben auf die Anlenkstelle eines Tragarmes an den Tragrahmen der Heuwerbungsmaschine nach Fig. 1;
- **Fig.3:**: eine teilweise abgebrochen dargestellte perspektivische Ansicht von unten auf die Anlenkstelle des Tragarmes an den Tragrahmen der Heuwerbungsmaschine nach Fig. 2 in einer Zwischenstellung zwischen der Transportstellung und der Arbeits- und Betriebsstellung;
- **Fig.4:**: eine teilweise abgebrochen dargestellte perspektivische Ansicht von der Seite auf die Anlenkstelle des Tragarmes nach Fig. 2 jedoch in der Transportstellung;

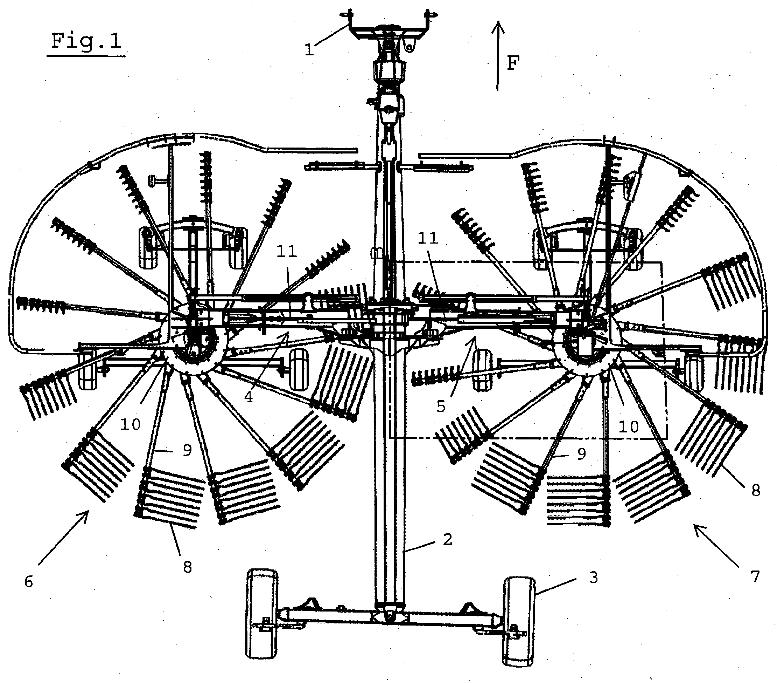

Aus der Fig. 1 ist der Aufbau einer erfindungsgemäßen Heuwerbungsmaschine ersichtlich, die über einen Anbaubock 1 beispielsweise an eine landwirtschaftliche Zugmaschine oder dgl. Zug- und Antriebsmaschine angekoppelt werden kann. An den Anbaubock 1 angelenkt, weist die Heuwerbungsmaschine weiterhin einen Tragrahmen 2 auf, der an seinem bezüglich der Fahrt- und Arbeitsrichtung F hinteren Ende über Laufräder 3 gegenüber dem Erdboden abgestützt ist. Etwa im mittleren Bereich des Tragrahmens 2 sind beidseitig vom Tragrahmen 2 um eine in Fahrt- und Arbeitsrichtung F weisende Achse schwenkbar Tragarme 4,5 am Tragrahmen 2 angelenkt, welche an ihren äußeren Enden Kreiselrechen 6,7 tragen. Die Kreiselrechen ihrerseits umfassen mit Zinken 8 bestückte Zinkenarme 9, die innerhalb eines Kreiselgehäuses 10 gelagert sind und von einer nicht näher dargestellten Steuerkurve innerhalb des Kreiselgehäuses 10 steuerbar sind. Mit der hier in der Arbeits- und Betriebsstellung dargestellten Heuwerbungsmaschine mit zwei gegenüberliegenden Kreiselrechen 6,7 kann auf einer Feld- oder Wiesenfläche liegendes, landwirtschaftliches Halmgut zu Mittelschwaden zusammen geschwadet werden. Für den Transport auf der Straße können die Kreiselrechen 6,7 über die Tragarme 4,5 aus der bodenparallelen Arbeits- und Betriebsstellung in eine zumindest annähernd vertikale Transportstellung überführt werden. Dazu dienen hydraulische Kolben-Zylinder-Anordnungen 11 oder dgl. Stellglieder, welche sich zwischen dem Tragrahmen 2 der Heuwerbungsmaschine und den die Kreiselrechen 6,7 tragenden Tragarme 4,5 erstrecken. Die Erfindung ist damit jedoch keineswegs auf eine Heuwerbungsmaschine mit zwei gegenüberliegend vom Tragrahmen 2 angeordneten Kreiselrechen beschränkt. Vielmehr kann der Gegenstand der Erfindung ebenso auf eine Heuwerbungsmaschine mit beidseitig vom Tragrahmen angebrachten Kreiselrechen angewendet sein, die in Fahrt- und Arbeitsrichtung versetzt zueinander angeordnet sind und sich zur Herstellung von seitlich von der Heuwerbungsmaschine abgelegten Schwaden eignet. Weiterhin kann die Erfindung auch an Heuwerbungsmaschinen eingesetzt werden, die über mehr als zwei Kreiselrechen verfügen.

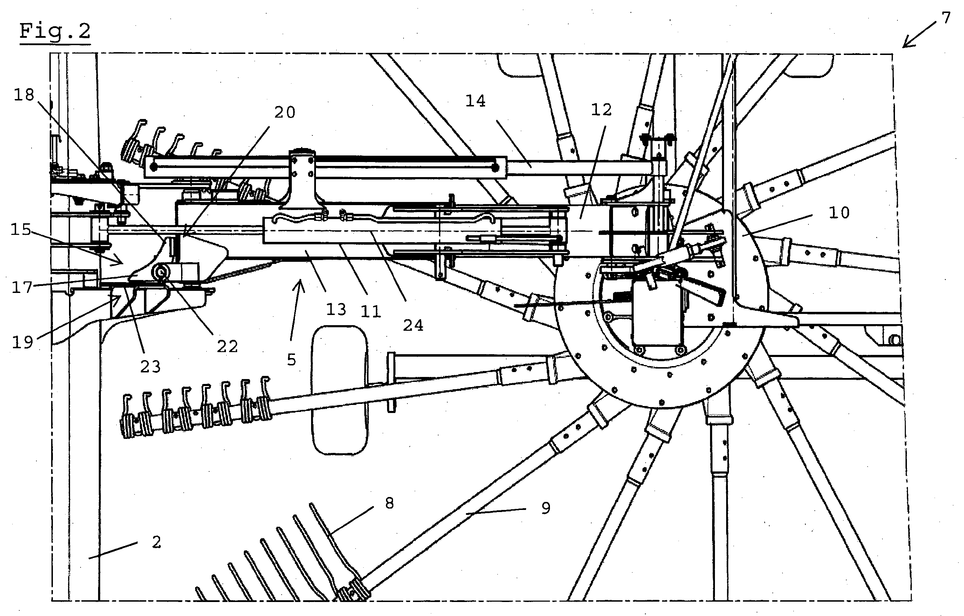

In der Fig. 2 bis 4 ist die Zuordnung der Tragarme 4,5 mit den daran angebrachten Kreiselrechen 6,7 zum Tragrahmen 2 der Heuwerbungsmaschine in einer vergrößerten Darstellung näher veranschaulicht. Zur Verstellung der maximalen Arbeitsbreite der Heuwerbungsmaschine bzw. der Schwadbreite in der Arbeits- und Betriebsstellung oder der maximalen Transporthöhe in der Transportstellung sind die die Kreiselrechen 6,7 tragenden Tragarme 4,5 längenveränderlich ausgebildet, wobei ein innerer Abschnitt 12 teleskopisch in einem äußeren Abschnitt 13 geführt ist und beide Abschnitte 12,13 über eine hydraulische Kolben-Zylinder-Anordnung 14 gegeneinander verschoben werden können, so dass dadurch die jeweilige Länge der Tragarme 4,5 verändert werden kann.

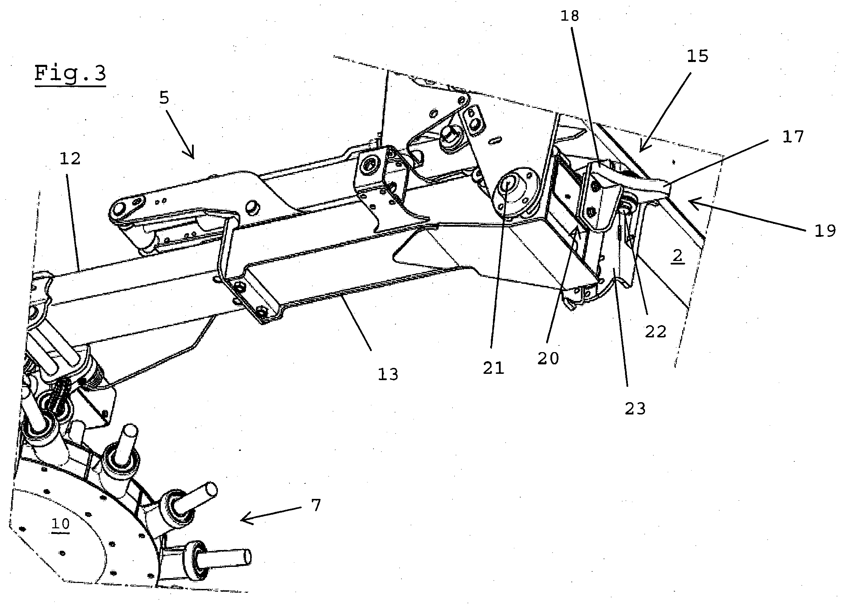

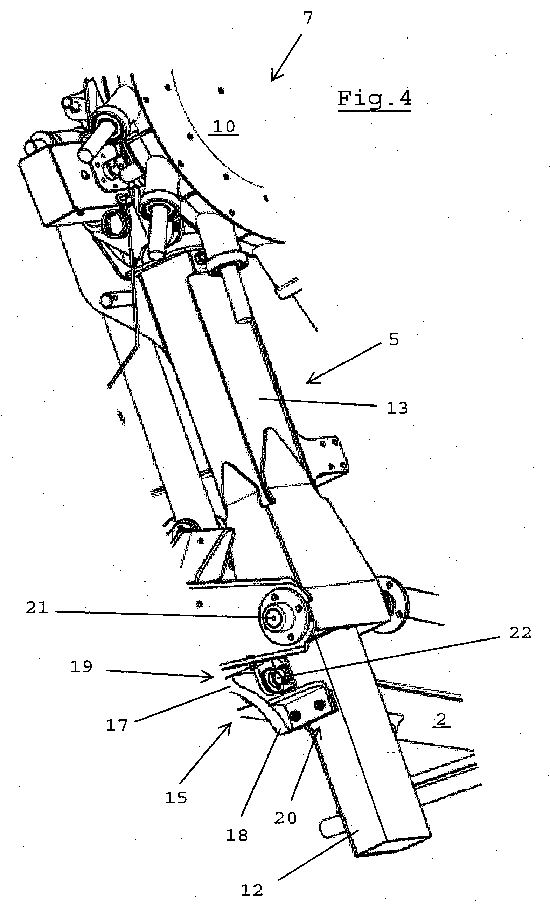

Wie den Fig. 2 bis 4 weiterhin zu entnehmen ist, ist den Tragarmen 4,5 an dem den Kreiselrechen 6,7 abgewandten Ende ein Sperrglied 15 zugeordnet, welches zwei Sicherungsfunktionen zur Verbesserung der Bedienersicherheit der Heuwerbungsmaschine ausführen kann. In einer ersten Stellung, die in Fig. 4 wiedergegeben ist, ist das Sperrglied 15 dazu eingerichtet, die Verschwenkung von zumindest einem der Tragarme 4,5 und damit auch der Kreiselrechen 6,7 aus der Transportstellung in eine Vorgewendestellung oder in die Arbeits- und Betriebsstellung zu unterbinden, wenn der betreffende Tragarm 4,5 vor dem Schwenkbeginn nicht auf eine vorbestimmte Länge eingestellt worden ist. Diese vorbestimmte Länge von mindestens einem der Tragarme 4,5 ergibt sich in der Arbeits- und Betriebsstellung durch den Abstand zwischen zwei, bei der Herstellung eines Mittel- oder Seitenschwades zusammen wirkenden Kreiselrechen 6,7, bei dem eine Kollision oder ein Aneinanderschlagen der Zinkenarme 9 vermieden ist. Wie deutlich aus der Fig. 4 hervorgeht, ist das Sperrglied 15 dazu als ein Winkelbauteil 16 ausgebildet, dessen Schenkel 17,18 Anlageflächen 19,20 aufweisen. Das Sperrglied 15 verhindert also dadurch, dass die Anlagefläche 20 an dem inneren Abschnitt 12 des Tragarmes 4,5 anliegt und sich gleichzeitig mit der Anlagefläche 19 gegenüber dem Tragrahmen 2 abstützt, eine Verschwenkung des Tragarmes 4,5 mit den daran angebrachten Kreiselrechen 6,7 aus der Transportstellung in die Arbeits- und Betriebsstellung. Die Fig. 4 zeigt dabei deutlich, dass die Sperrwirkung des Sperrgliedes 15 dadurch entsteht, dass zwischen der Schwenkachse 21 des Tragarmes 4,5 und dem Schenkel 17 des Sperrgliedes 15 ein Hebelarm wirksam ist, der das Verschwenken unterbindet. Erst durch eine Verschiebung des inneren Abschnittes 12 des Tragarmes 4,5 nach oben kann es erreicht werden, dass die Anlagefläche 20 des Sperrgliedes 15 nicht mehr an dem inneren Abschnitt 12 anliegt, so dass das Sperrglied 15 selbsttätig um die Achse 22 aus einer Sperrstellung in eine Freigabestellung verschwenken kann. Nun ist die Sperrwirkung des Sperrgliedes 15 in der Transportstellung aufgehoben und die Tragarme 4,5 mit den daran angebrachten Kreiselrechen 6,7 können aus der Transportstellung in die Arbeits- und Betriebsstellung verbracht werden. Eine Momentaufnahme dieses Vorganges ist in Fig. 3 wiedergegeben.

Die zweite Sicherungsfunktion wird von dem Sperrglied 15 in der Arbeits- und Betriebsstellung wahrgenommen. Insbesondere die Fig. 2 zeigt dabei deutlich, dass die Anlagefläche 20 des Schenkels 18 des Sperrgliedes 15 an dem, dem Tragrahmen 2 zugewandtem Ende des inneren Abschnittes 12 des Tragarmes 4,5 anliegt, während die Anlagefläche 19 des Schenkels 17 des Sperrgliedes 15 an einer Halterung 23 zur Aufnahme der Tragarme 4,5 anliegt, die fest mit dem Tragrahmen 2 verbunden ist. Weiterhin verdeutlicht die Darstellung nach Fig. 2, dass das Sperrglied 15 um die Achse 22 schwenkbar mit dem, den Kreiselrechen 6,7 abgewandten Ende der Tragarme 4,5 verbunden ist, wobei die Achse 22 in der Arbeits- und Betriebsstellung eine Ausrichtung aufweist, die etwa quer zu einer Längsmittelachse 24 der Tragarme 4,5 verläuft. Hinsichtlich der geometrischen Anordnung des Sperrgliedes 15 an den Tragarmen 4,5 sei noch darauf hingewiesen, dass das Sperrglied 15 seitlich versetzt zu einer durch die Längsmittelachse 24 führenden vertikalen Längsmittelebene an den Enden der Tragarme 4,5 angebracht ist. Aus dieser vorteilhaften Anordnung resultiert eine konstruktiv einfache Gestaltung des Sperrgliedes 15. Mit dieser zweiten Sicherungsfunktion wird also eine Reduzierung der Länge des jeweiligen Tragarmes 4,5 unterhalb eines vorbestimmten Grenzwertes verhindert, wenn der betreffende Kreiselrechen 6,7 über den jeweiligen Tragarm 4,5 aus der Arbeits- und Betriebsstellung in eine Vorgewendestellung oder in die Transportstellung überführt werden soll. Eine Reduzierung der Länge des betreffenden Tragarmes 4,5 wird dadurch verhindert, dass das Sperrglied 15 in der Arbeits- und Betriebsstellung eine weitere, zum Tragrahmen 2 hin gerichtete Verschiebung des inneren Abschnittes 12 zumindest eines der Tragarme 4,5 unterbindet. Eine weitere Verschiebung des inneren Abschnittes 12 zumindest eines der Tragarme 4,5 in Richtung auf den Tragrahmen 2 würde wiederum zu einer Kollision der Zinkenarme 9 der Kreiselrechen 6,7 führen.

Obwohl in der Beschreibung und in den dazugehörigen Zeichnungen bereits vorteilhafte Ausführungen beschrieben wurden, so sind im Rahmen der Erfindung durchaus weitere Modifikationen vorstellbar. In einer denkbaren Weiterbildung kann es vorgesehen sein, dass der Schenkel 18 des Sperrgliedes 15 mit einem zusätzlichen Gleitstück versehen ist und somit das Abtasten oder Erfassen des Tragarmes 4,5 verbessert ist. Außerdem kann die vorstehend beschriebene Zuordnung der Erfassung eines Zustandes der Tragarme zu der Anlagefläche 20 bzw. der Sperrung einer Bewegung durch die Anlagefläche 19 auch durchaus umgekehrt verwendet werden.

## Patentansprüche

1. Heuwerbungsmaschine zum Schwaden von landwirtschaftlichem Halmgut mit zumindest zwei, um vertikale Achsen umlaufend angetriebenen und sich über Stützräder gegenüber dem Erdboden abstützenden Kreiselrechen (6,7), welche mit Zinken (8) bestückte Zinkenarme (9) aufweisen und über Tragarme (4,5) an einem mit Laufrädern (3) versehenen Tragrahmen (2) schwenkbar angelenkt sind, so dass die Kreiselrechen (6,7) aus einer bodenparallelen Arbeits- und Betriebsstellung über hydraulische Kolben-Zylinderanordnungen (11) oder dgl. Stellglieder in eine zumindest annähernd vertikale Transportstellung und zurück überführbar sind, wobei die Tragarme (4,5) der Kreiselrechen (6,7) in der Arbeits- und Betriebsstellung zur Anpassung der Schwadbreite und in der Transportstellung zur Anpassung der maximalen Transporthöhe längenveränderbar ausgebildet sind, **dadurch gekennzeichnet, dass** an dem den Kreiselrechen (6,7) abgewandten Ende zumindest eines der Tragarme (4,5) ein Sperrglied (15) angeordnet ist, welches zwei Anlageflächen (19,20) zur Ermittlung, ob eine vorbestimmte Länge eines Tragarmes (4,5) vorliegt und zum Sperren einer Bewegung eines Tragarmes (4,5) aufweist und dass das Sperrglied (15) aus einer ersten Stellung, in der die Schwenkbewegung eines Tragarmes (4,5) aus der Transportstellung in die Arbeits- und Betriebsstellung unterbunden ist, in eine zweite Stellung, in der in der Arbeits- und Betriebsstellung die Anpassung der Schwadbreite auf einen, einen unteren Grenzwert unterschreitenden Betrag ausgeschlossen ist und zurück überführbar ist, wenn der jeweilige Tragarm (4,5) eine Länge aufweist, bei der eine Kollision von beidseitig an dem Tragrahmen (2) angelenkten Kreiselrechen (6,7) in der Arbeits- und Betriebsstellung ausgeschlossen ist.

2. Heuwerbungsmaschine nach Anspruch 1, **dadurch gekennzeichnet, dass** das Sperrglied (15) zwei unter einem Winkel zueinander angestellte Anlageflächen (19,20) aufweist.

3. Heuwerbungsmaschine nach zumindest einem der Ansprüche 1 oder 2, **dadurch gekennzeichnet, dass** die Anlageflächen (19,20) des Sperrgliedes (15) in etwa unter einem rechten Winkel zueinander angestellt sind.

4. Heuwerbungsmaschine nach zumindest einem der Ansprüche 1 bis 3, **dadurch gekennzeichnet, dass** das Sperrglied (15) an dem den Kreiselrechen (6,7) abgewandten Ende eines Tragarms (4,5) schwenkbar angebracht ist.

5. Heuwerbungsmaschine nach zumindest einem der Ansprüche 1 bis 4, **dadurch gekennzeichnet, dass** das Sperrglied (15) um eine in etwa quer zu einer Längsmittelachse (24) eines Tragarmes (4,5) ausgerichteten, in der Arbeits- und Betriebsstellung zumindest annähernd vertikalen Schwenkachse (22) an dem den Kreiselrechen (6,7) abgewandten Ende eines Tragarms (4,5) schwenkbar angebracht ist.

6. Heuwerbungsmaschine nach zumindest einem der Ansprüche 1 bis 5, **dadurch gekennzeichnet, dass** das Sperrglied (15) an dem den Kreiselrechen (6,7) abgewandten Ende eines Tragarms (4,5) seitlich versetzt zu einer durch die Längsmittelachse (24) des Tragarmes (4,5) vertikalen Längsmittelebene angeordnet ist.

7. Heuwerbungsmaschine nach zumindest einem der Ansprüche 1 bis 6, **dadurch gekennzeichnet, dass** das Sperrglied (15) als Winkelbauteil (16) ausgebildet ist, wobei dessen Schenkel (17,18) die Anlageflächen (19,20) bilden.

8. Heuwerbungsmaschine nach zumindest einem der Ansprüche 1 bis 7, **dadurch gekennzeichnet, dass** der Schenkel (18) des Sperrgliedes (15), der zum Erfassen eines Zustandes eines Tragarmes (4,5) vorgesehen ist, mit einem zusätzlichen Gleitstück versehen ist.

## Claims

1. Haymaking machine for windrowing stalked agricultural crops, comprising at least two rotary rakes (6, 7) which are driven so as to rotate about vertical axes and are supported relative to the ground by support wheels, which rakes comprise tine arms (9) fitted with tines (8) and are pivotally articulated by means of supporting arms (4, 5) to a support frame (2) provided with running wheels (3) such that the rotary rakes (6, 7) can be moved, by means of hydraulic piston-cylinder arrangements (11) or similar actuators, from a working and operating position that is parallel to the ground into an at least approximately vertical transport position and vice versa, the supporting arms (4, 5) of the rotary rakes (6, 7) being length-adjustable so as to adapt to the windrowing width in the working and operating position and to adapt to the maximum transport height in the transport position, **characterised in that** a blocking member (15) is arranged on the end of at least one of the supporting arms (4, 5) that is remote from the rotary rakes (6, 7), which blocking member comprises two contact surfaces (19, 20) for determining whether a predetermined length of a supporting arm (4, 5) is present and for blocking a movement of a supporting arm (4, 5), and **in that** the blocking member (15) can be moved out of a first position, in which a supporting arm (4, 5) cannot pivot out of the transport position and into the working and operating position, into a second position, in which, in the working and operating position, it is not possible to adapt the windrowing width to a value that falls below a lower threshold value, and vice versa, when the relevant supporting arm (4, 5) has a length at which rotary rakes (6, 7) articulated to either side of the supporting frame (2) cannot collide in the working and operating position.

2. Haymaking machine according to claim 1, **characterised in that** the blocking member (15) comprises two contact surfaces (19, 20) that are at an angle to one another.

3. Haymaking machine according to at least one of claims 1 or 2, **characterised in that** the contact surfaces (19, 20) of the blocking member (15) are approximately at a right angle to one another.

4. Haymaking machine according to at least one of claims 1 to 3, **characterised in that** the blocking member (15) is pivotally attached to the end of a supporting arm (4, 5) that is remote from the rotary rakes (6, 7).

5. Haymaking machine according to at least one of claims 1 to 4, **characterised in that** the blocking member (15) is attached to the end of a supporting arm (4, 5) that is remote from the rotary rakes (6, 7) so as to be pivotable about a pivot axis (22) that is oriented approximately transversely to a central longitudinal axis (24) of a supporting arm (4, 5) and is at least approximately vertical in the working and operating position.

6. Haymaking machine according to at least one of claims 1 to 5, **characterised in that** the blocking member (15) is arranged at the end of a supporting arm (4, 5) that is remote from the rotary rakes (6, 7) in a manner laterally offset from a central longitudinal plane passing vertically through the central longitudinal axis (24) of the supporting arm (4, 5).

7. Haymaking machine according to at least one of claims 1 to 6, **characterised in that** the blocking member (15) is formed as an angle bracket component (16), the legs (17, 18) of which form the contact surfaces (19, 20).

8. Haymaking machine according to at least one of claims 1 to 7, **characterised in that** the leg (18) of the blocking member (15), which member is provided for detecting a state of a supporting arm (4, 5), is provided with an additional slide.

## Revendications

1. Andaineuse pour former des andains avec des produits agricoles à tiges, ayant au moins deux râteaux rotatifs (6, 7) entraînés en rotation autour d'axes verticaux et s'appuyant sur le sol par des roues de sustentation, les râteaux rotatifs ayant des rayons (9) garnis de dents (8) et ils sont articulés de manière pivotante par des bras de support (4, 5) à un châssis (2) muni de roues de roulements (3), de façon que les râteaux rotatifs (6, 7) puissent être conduits d'une position de travail et de fonctionnement, parallèle au sol en une position de transport au moins pratiquement verticale et inversement, par des vérins hydrauliques (11) ou actionneurs analogues,
- les bras de support (4, 5) des râteaux rotatifs (6, 7) étant de longueur variable en position de travail et de fonctionnement pour adapter la largeur de l'andain et en position de transport pour adapter la hauteur maximal de transport,
andaineuse **caractérisée en ce que**
l'extrémité d'au moins un bras de support (4, 5) à l'opposé du râteau rotatif (6, 7), comporte un organe de verrouillage (15) ayant deux surfaces d'appui (19, 20) pour déterminer si l'on a une longueur donnée pour le bras de support (4, 5) et pour bloquer le mouvement du bras de support (4, 5), et
l'organe de verrouillage (15) exclut le passage d'une première position dans laquelle le mouvement de pivotement d'un bras de support (4, 5) passe de sa position de transport à sa position de travail et de fonctionnement, dans une seconde position dans laquelle, en position de travail et de fonctionnement, l'adaptation de la largeur de l'andain sur une valeur inférieure à une valeur limite basse est exclue et est reconduite si le bras de support (4, 5), respectif, a une longueur qui exclut une collision des deux râteaux rotatifs (6, 7) articulés sur les deux côtés du châssis (2), en position de travail et de positionnement.

2. Andaineuse selon la revendication 1,
**caractérisé en ce que**
l'organe de verrouillage (15) comporte deux surfaces d'appui (19, 20) faisant entre elles un angle.

3. Andaineuse selon au moins l'une des revendications 1 ou 2,
**caractérisé en ce que**
les surfaces d'appui (19, 20) de l'organe de verrouillage (15) font entre elles un angle sensiblement droit.

4. Andaineuse selon au moins l'une des revendications 1 à 3,
**caractérisé en ce que**
l'organe de verrouillage (15) est monté pivotant à l'extrémité d'un bras de support (4, 5) à l'opposé de celle du râteau rotatif (6, 7).

5. Andaineuse selon au moins l'une des revendications 1 à 4,
**caractérisé en ce que**
l'organe de verrouillage (15) est monté pivotant sur un axe de pivotement (22) au moins sensiblement vertical, orienté sensiblement transversalement à l'axe longitudinal médian (24) du bras de support (4, 5) en position de travail et de fonctionnement, à l'extrémité du bras de support (4, 5) à l'opposé de celle du râteau rotatif (6, 7).

6. Andaineuse selon au moins l'une des revendications 1 à 5,
**caractérisé en ce que**
l'organe de verrouillage (15) est décalé latéralement à l'extrémité du bras de support (4, 5) à l'opposé de celle du râteau rotatif (6, 7) par rapport au plan médian longitudinal vertical passant par l'axe longitudinal médian (24) du bras de support (4, 5).

7. Andaineuse selon au moins l'une des revendications 1 à 6,
**caractérisé en ce que**
l'organe de verrouillage (15) est une pièce coudée (16) dont les branches (17, 18) forment les surfaces d'appui (19, 20).

8. Andaineuse selon au moins l'une des revendications 1 à 7,
**caractérisé en ce que**
la tranche (18) de l'organe de verrouillage (15) qui détecte l'état du bras de support (4, 5) est muni d'une pièce de glissement supplémentaire.
